(19) Europäisches Patentamt
European Patent Office
Office européen des brevets

(11) Veröffentlichungsnummer: **0 043 934**
**B1**

(12) **EUROPÄISCHE PATENTSCHRIFT**

(45) Veröffentlichungstag der Patentschrift: **04.04.84**

(21) Anmeldenummer: **81104690.3**

(22) Anmeldetag: **19.06.81**

(51) Int. Cl.³: **C 09 D 5/40,** C 08 C 19/36, C 08 G 59/40, C 08 G 59/62, C 08 G 59/18, C 08 G 14/00

(54) **Stickstoffbasische Gruppen tragendes Polyadditions/Polykondensationsprodukt, Verfahren zu dessen Herstellung und dessen Verwendung.**

(30) Priorität: **16.07.80 DE 3026823**

(43) Veröffentlichungstag der Anmeldung: **20.01.82 Patentblatt 82/3**

(45) Bekanntmachung des Hinweises auf die Patenterteilung: **04.04.84 Patentblatt 84/14**

(84) Benannte Vertragsstaaten: **AT BE CH DE FR GB IT LI NL SE**

(56) Entgegenhaltungen:
**DE-A-2 728 470**
**DE-A-2 934 467**
**DE-A-2 944 082**
**GB-A-2 028 830**

(73) Patentinhaber: **BASF Aktiengesellschaft, Carl-Bosch-Strasse 38, D-6700 Ludwigshafen (DE)**

(72) Erfinder: **Kempter, Fritz Erdmann, Dr., L2, 14, D-6800 Mannheim (DE)**
Erfinder: **Schupp, Eberhard, Dr., Tilsiter Weg 4, D-6830 Schwetzingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 043 934 B1

BUNDESDRUCKEREI BERLIN

## Stickstoffbasische Gruppen tragendes Polyadditions/Polykondensationsprodukt, Verfahren zu dessen Herstellung und dessen Verwendung

Die vorliegende Erfindung betrifft durch Protonierung mit Säure wasserverdünnbare, stickstoffbasische Gruppen tragende Polyadditions/Polykondensationsprodukte, ein Verfahren zu deren Herstellung und deren Verwendung für die kathodische Elektrotauchlackierung metallischer Gegenstände.

Es ist bekannt, daß Kunstharze, welche neben basischen Gruppen $\alpha,\beta$-ungesättigte Carbonsäureestergruppen enthalten, wie sie z. B. in der DE-OS 2 429 527 beschrieben sind, durch Polymerisation der Doppelbindungen vernetzt werden können. Derartige Produkte wurden u. a. in der DE-OS 2 749 776 als kathodisch abscheidbare Bindemittel empfohlen.

Die Addition von Aminen an $\alpha,\beta$-ungesättigten Carbonylverbindungen ist z. B. in »Organikum«, S. 492 (VEB Deutscher Verlag der Wissenschaften 1967) beschrieben.

Gemäß DE-OS 2 346 424 wird eine derartige Reaktion benützt, um UV-härtbare Überzugsmittel herzustellen.

In der DE-OS 2 753 861 wird dieselbe Reaktion zur Herstellung von kathodisch abscheidbaren Bindemitteln herangezogen. Nach der US-PS 4 039 414 werden kationische UV-härtbare Bindemittel durch Umetherung von Methylmethylolacrylamid mit einem Epoxidharzderivat erhalten. Um den Materialien einen kationischen Charakter zu verleihen, erfolgt gegebenenfalls die Michaeladdition von Aminen an z. B. Polyacrylaten, die Doppelbindungen aufweisen oder der Einbau von basischen Stickstoff über die Epoxid/Aminreaktion.

In der DE-A-2 934 467 werden $\alpha,\beta$-ungesättigte Amidgruppen enthaltende und zur Elektrotauchlackierung geeignete Produkte beschrieben, wobei die Amidgruppen über Methyloletherbrücken an das Polymermolekül gebunden sind. Wie aus Beispiel 1 dieser DE-A ersichtlich ist, werden Polyepoxide mit Polyolen und anschließend mit N-Butoxymethylacrylamid zu einem polymeren Material mit

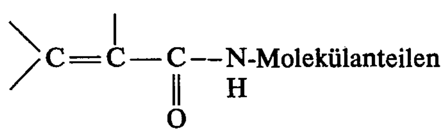

umgesetzt. Daraus wird dann durch Umsetzung mit Dimethylamin ein Michael-Addukt erhalten, d. h. eine polymeranaloge Umetherungsreaktion durchgeführt. Die stickstoffbasischen Gruppen werden hier also über Michael-Addition von flüchtigen Aminen eingeführt. Wesentlich ist hierbei, daß die Amine beim Einbrennvorgang den Film verlassen, wobei angegeben wird, daß im allgemeinen eine oxydative Härtung mit (basischen) amingruppenhaltigen Harzen nicht möglich ist.

Aus der DE-A-2 728 470 waren durch Protonisieren mit Säure wasserverdünnbare Harze bekannt, die $\alpha,\beta$-äthylenisch ungesättigte Dicarbonsäureimide eingebaut enthalten, deren Imidstickstoffatome Gruppen mit basischen tertiären N-Atomen und Gruppen, die ein mit Formaldehyd-Kondensationsharzen und/oder blockierten Polyisocyanaten reaktionsfähiges Wasserstoffatom tragen, wobei die Dicarbonsäureimide an 1,4-cis-Polybutadienöl addiert sein können. Die Vernetzung erfolgt hier also mit Formaldehyd-Kondensationsharzen oder blockierten Polyisocyanaten.

Aufgabe der vorliegenden Erfindung ist es, den Einbau von copolymerisierbaren Doppelbindungen in $\alpha,\beta$-ungesättigte Amidomethylphenylgruppen enthaltende Bindemittelsysteme sicherzustellen und die in der DE-A-2 934 467 genannten Schwierigkeiten bei der oxydativen Vernetzung zu überwinden. Dabei soll neben der Möglichkeit der Copolymerisation des Polydienanteiles im Molekül durch die Gruppierung

$$-CH_2-NH-CO-CR^1=CR^2,$$

worin $R^1$ und $R^2$ für Wasserstoff oder eine Methylgruppe stehen, eine gewisse innere Weichmachung der damit hergestellten Beschichtungen erzielt werden.

Darüber hinaus soll eine bessere Verträglichkeit mit nachträglich zugemischten Polydienen bzw. nicht basischen Polydienderivaten erreicht werden.

Aufgabe der vorliegenden Erfindung ist es außerdem, kathodisch abscheidbare Bindemittel bereitzustellen, welche hinsichtlich der Emission von Spaltprodukten beim Einbrennen z. B. von Aminen und/oder ($\alpha,\beta$-ungesättigte) acrylische Doppelbindung enthaltenden Verbindungen, bessere Ergebnisse als die bekannten Verfahren aufweisen.

Dieses Ziel wird überraschenderweise durch den Einbau von in $\alpha$-Stellung Polydienylreste tragenden Bernsteinsäureimiden erreicht.

Gegenstand der vorliegenden Erfindung sind durch Protonierung mit Säure wasserverdünnbare stickstoffbasische Gruppen tragende Polyadditions/Polykondensationsprodukte, die Gruppen der allgemeinen Formel (I)

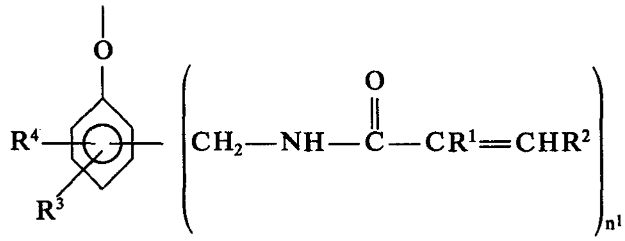

(I)

und/oder

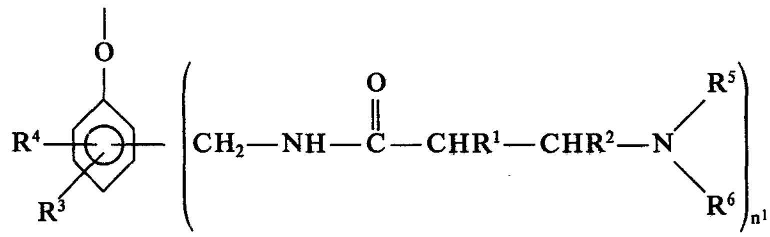

(II)

enthalten, die dadurch gekennzeichnet sind, daß sie zusätzlich Gruppierungen der Formel (III)

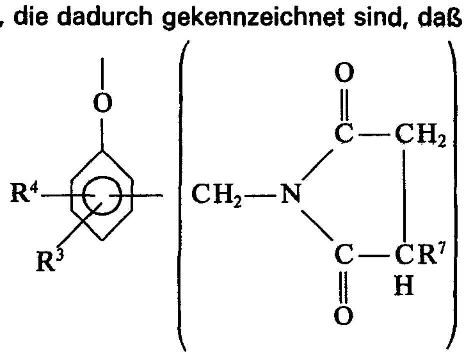

(III)

enthalten, wobei $R^1$ und $R^2$ untereinander gleich oder verschieden sind und für Wasserstoff oder eine Methylgruppe stehen, $R^3$ und $R^4$ untereinander gleich oder verschieden sind und für Wasserstoff, einen Alkylrest mit 1 bis 13 Kohlenstoffatomen oder für einen an ein Phenol oder einen Phenoläther gebundenen Methylen-, Isopropyliden-,

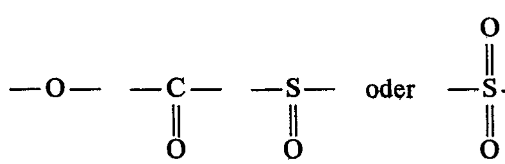

oder -Rest stehen,

$R^5$ und $R^6$ untereinander gleich oder verschieden sind und für einen Alkylrest mit 1 bis 10 Kohlenstoffatomen, eine Hydroxyalkyl- oder Alkoxyalkylgruppe mit 2 bis 10 Kohlenstoffatomen stehen oder miteinander zu einem 5- oder 6gliedrigen Ring verknüpft sind,

$R^7$ für einen Polydienylrest steht,
$n^1$ = 0,5 bis 3 und
$n^2$ = 0,05 bis 1,0, mit der Maßgabe, daß das Polyadditions/Polykondensationsprodukt dadurch hergestellt worden ist, daß man

(A) ein Gemisch aus Amido- und Imido-methylphenolen, das durch Umsetzung von

($a_1$) ein- oder mehrkernigen Mono- und/oder Polyphenolen mit
($a_2$) Amiden $\alpha,\beta$-olefinisch ungesättigter Carbonsäuren mit 3 bis 4 Kohlenstoffatomen,
($a_3$) Bernsteinsäureimiden, die in $\alpha$-Stellung einen Polydienylrest tragen, und
($a_4$) Formaldehyd oder einer Formaldehyd liefernden Verbindung,
in Gegenwart
($a_5$) eines sauren Katalysators
erhalten worden ist, wobei gegebenenfalls zumindest an einen Teil der olefinischen Doppelbindungen
($a_6$) ein sekundäres Amin addiert worden ist, mit

(B) mindestens einer Epoxidverbindung umgesetzt worden ist und 30 bis 80 Gewichtsprozent des Gemisches aus Amido- und Imido-methylphenol (A) mit 20–70 Gewichtsprozent Epoxidverbindung (B) umgesetzt worden sind und die so erhaltenen Reaktionsprodukte 0,02 bis 10 Milliäquivalente an basischem Stickstoff pro Gramm Feststoff enthalten.

Gemäß der vorliegenden Erfindung wird ein niedermolekulares Phenol gemäß Formel (I) und/oder (II) und (III), erhalten durch Amidomethylierung, durch basenkatalysierte Veretherung der phenolischen Hydroxylgruppen mit Epoxidgruppen zu einem polymeren Material aufgebaut.

Zunächst erfolgt also eine Polykondensation, der eine Polyaddition folgt.

Gegenstand der Erfindung ist auch die Verwendung der erfindungsgemäßen Polyadditions/Polykondensationsprodukte zur kathodischen Elektrotauchlackierung metallischer Gegenstände.

Überraschenderweise ergeben die erfindungsgemäßen Polyadditions/Polykondensationsprodukte gegenüber den obengenannten Produkten des vorbekannten Standes der Technik deutliche Vorteile hinsichtlich Elastizität und Korrosionsschutz der damit erhaltenen Überzüge.

Komponente (A) der erfindungsgemäßen Polyadditions/Polykondensationsprodukte kann nach der sogenannten Tscherniac-Einhorn-Reaktion in einer sauer katalysierten Umsetzung aus N-Methylol(meth)acrylamid und in $\alpha$-Stellung Polydienylreste tragenden Bernsteinsäureimid-N-methylolverbindungen mit Mono- und/oder mehrkernigen Phenolen erhalten werden.

Gegebenenfalls kann im Anschluß daran zumindest ein Teil der $\alpha,\beta$-ungesättigten Doppelbindungen der allgemeinen Formel (I) mit sek. Aminen durch die sog. Michael-Reaktion entfernt werden, worauf die Bildung des erfindungsgemäßen Bindemittels durch Weiterreaktion mit der Komponente (B) erfolgt.

Besonders vorteilhafte Ausführungsformen der erfindungsgemäßen Produkte werden erhalten, wenn zur Herstellung der Komponente (A) als Komponente ($a_3$) 0,5 bis 70 Gewichtsprozent in $\alpha$-Stellung Polydienylreste tragende Bernsteinsäureimide eingesetzt worden sind. Sehr vorteilhaft wirkt sich auch aus, wenn dem erfindungsgemäßen Verfahrensprodukt bis zu 25, vorzugsweise 0,5 bis 15 Gewichtsprozent eines Polydienes bzw. eines nichtbasischen Polydienderivates zugemischt werden.

Hinsichtlich der Aufbaukomponenten der erfindungsgemäßen Polyadditions/Polykondensationsprodukte ist im einzelnen folgendes auszuführen:

(A) Die Herstellung der Amido- und Imido-methyl-gruppen enthaltenden Phenolen (A) kann aus

($a_1$) ein- oder mehrkernigen Mono- und/oder Polyphenolen,
($a_2$) Amiden $\alpha,\beta$-ungesättigten Carbonsäuren mit 3 oder 4 Kohlenstoffatomen,
($a_3$) in $\alpha$-Stellung Polydienylreste tragende Bernsteinsäureimiden,
($a_4$) Formaldehyd oder einer Formaldehyd liefernden Verbindung,
in Gegenwart
($a_5$) eines sauren Katalysators erfolgen und gegebenenfalls
($a_6$) ein sekundäres Amin addiert werden.

($a_1$) Als ein- oder mehrkernige Mono- und/oder Polyphenole kommen in Betracht: Phenol und seine Monoalkylderivate bzw. Di-alkylderivate mit 1 bis 15 Kohlenstoffatomen in den Alkylgruppen z. B. o- und p-Kresol, p-t-Butylphenol oder Naphthole wie $\alpha$- und $\beta$-Naphthol sowie ®Cardanol, welches im wesentlichen aus 3-(8,11)-Pentadecadienyl)-phenol bestehend beschrieben wird, ferner Phenole der allgemeinen Formel

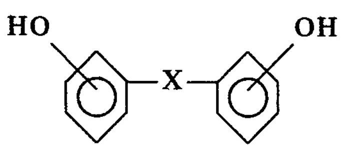

wobei die Hydroxylgruppen in ortho- oder para-Stellung zu X stehen und X ein geradkettiger oder zweiwertiger aliphatischer Rest mit 1 bis 3 Kohlenstoffatomen oder $SO_2$, SO, S, CO oder O ist.

Auch niedrig molekulare Umsetzungsprodukte aus Phenolen mit Formaldehyd, sogenannte Novolake können als Komponente ($a_1$) eingesetzt werden, sowie zumindest anteilig, die in der DE-OS 2 419 179 genannten Ethergruppen enthaltenden Phenolen.

($a_2$) Als Amide $\alpha,\beta$-ungesättigter Carbonsäuren mit 3 oder 4 Kohlenstoffatomen kommen Acrylamid und Methacrylamid und Crotonamid in Betracht.

($a_3$) Als in $\alpha$-Stellung Polydienylreste tragende Bernsteinsäureimide kommen in Frage die mindestens 1 bis 4 Imidgruppen (bevorzugt 1 bis 3) pro Molekül enthaltenden und durch Reaktion von Polydienen mit Maleinsäureanhydrid erhaltenen Umsetzungsprodukte, die anschließend mit

Ammoniak oder einer Ammoniak liefernden Verbindung in das Imid überführt werden.

Als Polydiene zur Herstellung der Komponente ($a_3$) kommen in Betracht Polymere des Butadiens, Isoprens, Chloroprens, Pentadiens-1,3, Cyclopentadiens, Piperylens, insbesondere aber die Polymeren des Butadiens mit einem mittleren Molekulargewicht von 200 bis 6000, vorzugsweise 500 bis 3000, sowie Coplymere des Butadiens mit z. B. Styrol, wobei die Produkte die übliche Feinstruktur hinsichtlich des Charakters der Doppelbindungen (Vinyl-1,2; Cis und Trans-1,4 sowie cyclischer Anteile) aufweisen. Geeignete derartige Polydiene weisen im allgemeinen Jodzahlen von 100 bis 500, vorzugsweise 200 bis 480, auf.

Die Maleinisierung der Polydiene wird zweckmäßigerweise in Abhängigkeit vom mittleren Molekulargewicht des Polydienes mit den üblichen Mengen an Maleinsäureanhydrid (im allgemeinen 5 bis 25, vorzugsweise 10 bis 20%) nach bekannten Verfahren durchgeführt. Das gilt auch für die anschließende Überführung des Adduktes in das Imid mit Ammoniak oder einer Ammoniak liefernden Verbindung, beispielsweise Harnstoff (vgl. DE-OS 2 728 470), Ammoniumcarbonat usw.

($a_4$) Als Komponente ($a_4$) kommen Formaldehyd und Formaldehyd liefernde Verbindungen, wie Paraformaldehyd in Frage.

($a_5$) Die Umsetzung der Komponente ($a_1$) mit ($a_2$), ($a_3$) und ($a_4$) erfolgt zweckmäßigerweise in Anwesenheit eines sauren Katalysators. Unter $H_2O$-Abspaltung tritt Imido- und Amido-methylierung am aromatischen Kern des Phenols ein. Derartige Reaktionen sind als Tscherniac-Einhorn-Reaktionen bekannt. Die Umsetzung von 2,2-Bis-p-hydroxyphenyl-propan mit N-Methylolacrylamid in Eisessig mit HCL als Katalysator ist in der US-PS 3 839 447 beschrieben.

Geeignete Katalysatoren sind außerdem p-Toluolsulfonsäure, Fluorwasserstoffsäure, Bortrifluoriddiethyletherat und Schwefelsäure.

Im Rahmen der vorliegenden Erfindung haben sich Sulfosäuren, wie z. B. p-Toluolsulfonsäure, insbesondere aber Bortrifluoriddiethyletherat als Katalysator bewährt.

Im Rahmen des erfindungsgemäßen Herstellungsverfahrens ist es selbstverständlich möglich, das Amid

$HO-CH_2-NH-CO-CR^1=CHR^2$ und Imid 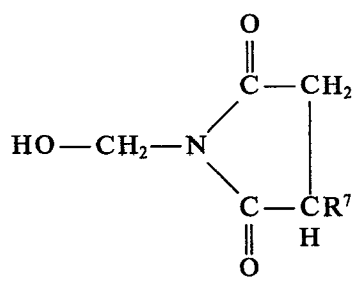

in situ in Anwesenheit der Komponente ($a_1$) herzustellen. So läßt sich zum Beispiel Phenol ($a_1$), Acrylamid ($a_2$), Polybutadienmaleinimidaddukt ($a_3$) und Paraformaldehyd ($a_4$) in Toluol mit Bortrifluoriddiethyletherat ($a_5$) in' die erfindungsgemäße Komponente (A) überführen, ein Verfahrensschritt, der besonders bevorzugt durchgeführt wird.

Die Herstellung der Komponente (A) kann in einem weiteren Temperaturbereich (30 bis 150°C), vorzugsweise 50 bis 120°C zweckmäßigerweise in Gegenwart von Lösungsmittel wie Toluol, Xylol, Isobutanol, Ethylglykol, Ethylhexanol usw., zweckmäßigerweise in Anwesenheit eines Inhibitors zur Verhinderung der Bildung freier Radikale durchgeführt werden. Zu den erfindungsgemäßen Verfahrensprodukten gelangt man auch dann, wenn man anstatt der obengenannten N-Methylolamide und N-Methylolimide die entsprechenden Alkylether einsetzt z. B. den Methylolbutylether.

Das Verhältnis der Komponenten ($a_1$), ($a_2$), ($a_3$), ($a_4$) kann 1 : 0,3 : 0,05 : 0,35 bis 1 : 4 : 0,6 : 6,5 betragen, wobei der Bereich 1 : 0,5 : 0,05 : 0,55 bis 1 : 2,0 : 2,0 : 0,4 : 0,35 besonders bevorzugt ist.

($a_6$) Als Komponente ($a_6$) kommen sekundäre Amine der allgemeinen Formel

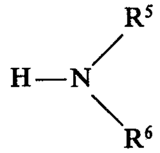

in Frage, wobei $R^5$ und $R^6$ untereinander gleich oder verschieden sind und für einen Alkylrest mit 1 bis 10, vorzugsweise 4 bis 9 Kohlenstoffatomen, eine Hydroxyalkylgruppe mit 2 bis 10 Kohlenstoffatomen oder eine Alkoxyalkylgruppe mit 2 bis 10 Kohlenstoffatomen stehen oder miteinander zu einem 5- oder 6gliedrigen Ring verknüpft sind.

Bevorzugt sind solche sekundären Amine, die auf Grund ihres Siedepunktes auch bei einer

eventuellen Abspaltung beim Einbrennvorgang, nicht oder nur in geringem Umfang in der Lage sind den Film zu verlassen.

Besonders bevorzugt sind Amine mit einer sekundären und einer tertiären Aminogruppe, beispielsweise ausgewählt aus der Klasse der Piperazine wie N-Hydroxyethylpiperazin oder z. B. N,N,N'-Trimethylalkylendiamine. Ihr Vorteil ist, neben der geringen Flüchtigkeit, daß zwei Aminogruppen pro Reaktionsschritt eingebaut werden und daß z. B. verglichen mit dem ebenfalls wenig flüchtigen Diethanolamin die eingebauten N-Atome wesentlich basischer sind und so neben einem höheren pH-Wert der Bäder eine verbesserte katalytische Wirkung auf die Reaktion der Komponente (A) mit der Komponente (B) gewährleistet, oder eine Verminderung der Reaktionstemperatur beziehungsweise eine spezifischere Reaktionsführung im Sinne der Reaktion der phenolischen Gruppen mit den Epoxidgruppen sichergestellt wird.

(B) Als Epoxidverbindungen (b) kommen insbesondere Polyepoxidverbindungen in Betracht. Es können alle üblichen Epoxidharze eingesetzt werden, z. B. die Diglycidylether von Bisphenol A, welche z. B. aus Bisphenol A und Epichlorhydrin in Gegenwart von Alkali hergestellt werden können. Auch die Polyglycidylether von mehrwertigen Alkoholen mit einem Molekulargewicht des Polyglycidylethers von 180 bis 2500, z. B. die von Pentaerythrit, Glycerin, Trimethylolpropan, Ethylenglykol, Diethylenglykol, Polyoxyethylenglykole und Polyoxypropylenglykole mit Molekulargewichten von 200 bis 2000 und anderer mehrwertiger, vorzugsweise zwei- bis vierwertiger Alkohole können verwendet werden.

Andere geeignete Polyepoxidverbindungen sind stickstoffhaltige Diepoxide, wie sie in der US-PS 3 365 471 beschrieben sind, Epoxidharze aus 1,1-Methylen-bis-(5-substituiertem Hydantoin) nach der US-PS 3 391 097, Diepoxide aus Bisimiden nach US-PS 3 450 711, epoxydierte Aminomethyl-diphenyloxide nach US-PS 3 321 664, heterocyclische N,N'-Diglycidylverbindungen nach US-PS 3 503 979, Aminoepoxyphosphate nach GB-PS 1 172 916 und geblockte Isocyanatgruppen enthaltende Polyepoxidverbindungen, wie sie z. B. in der GB-PS 1 563 917 beschrieben sind. Epoxidgruppenreiche Glycidylverbindungen mit hohem Epoxidwert können auch im Gemisch mit einem Unterschuß an Polyphenolen (Bisphenol-A) eingesetzt werden. Die der Reaktion der Komponente (A) und (B) gleichlaufende Reaktion ist gleichbedeutend mit dem Einsatz eines Epoxidharzes mit niedrigem Epoxidwert bzw. höherem Molekulargewicht. Geeignet sind auch 1,3,5-Triglycidylisocyanurate und andere in der Technik gut bekannte Materialien, die Epoxidgruppen enthalten, wie z. B. Dicyclopentadiendioxid und Limonendioxid sowie epoxidierte Butadienöle und Glycidylether von Phenol/®Cardanol-Addukten. Es können auch anteilweise Monoepoxidverbindungen mitverwendet werden, sofern dies, z. B. zur Einstellung des Molekulargewichts der Bindemittel erwünscht ist. Glycidylester von langkettigen Carbonsäuren, wie z. B. ®Cardura E (der Firma Shell) oder Glycidylether von langkettigen Alkoholen können verwendet werden, falls das Bindemittel weichgemacht werden soll, was zu elastischeren Überzügen führt.

Mitverwendet werden können auch solche Epoxidverbindungen, die aus Polyepoxidverbindungen durch Umsetzung mit einem Unterschuß an primären und/oder sekundären Aminen oder Aminsalzen erhalten werden:

Die Umsetzung des Amins mit der Polyepoxidverbindung kann, sofern es sich um eine bei der Reaktionstemperatur flüssige Polyepoxidverbindung handelt, lösungsmittelfrei durchgeführt werden. Es können aber auch Lösungsmittel verwendet werden, z. B. Kohlenwasserstoffe wie Benzol oder Toluol, Alkohole wie Isopropanol oder Isobutanol, Etheralkohole, wie Ethylenglykolmonoethylether oder Ketone, Ether, Ester, etc. Die Amine können auch in Form ihrer kohlensauren Salze eingesetzt werden, bzw. es kann unter Durchleiten von Kohlendioxid durch das Reaktionsgefäß gearbeitet werden. Dadurch können unter Umständen unerwünschte Nebenreaktionen, wie die Selbstkondensation der Polyepoxidverbindungen zurückgedrängt werden.

Als hierzu verwendbare primäre oder sekundäre Amine eignen sich z. B. solche der allgemeinen Formel $H_2N-R^5$ bzw.

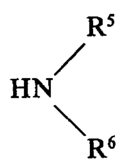

worin $R^5$ und $R^6$ gleiche oder verschiedene Alkylgruppen mit 1 bis 10 Kohlenstoffatomen, Hydroxyalkyl- oder Alkoxyalkylreste mit 2 bis 10 Kohlenstoffatomen bedeuten oder zusammen einen 5- oder 6gliedrigen Ring bilden. Beispiele von primären oder sekundären Aminen, die eingesetzt werden können, sind Mono- und Dialkylamine wie Methylamin, Ethylamin, Propylamin, Isopropylamin, Butylamin, Isobutylamin, n-Butylamin, Dimethylamin, Diethylamin, Dipropylamin, Dibutylamin, Pyrrolidin, Piperidin, Morpholin etc. Die Amine können auch zusätzliche funktionelle Gruppen, wie Hydroxylgruppen, tragen, z. B. Alkanolamine mit 2 bis 4 Kohlenstoffatomen in den Alkanolgruppen,

wie Ethanolamin, Propanolamin, 3-Aminopropanol, Diethanolamin, Diisopropanolamin u. dgl.

Auch Amine mit mehreren basischen Stickstoffatomen können eingesetzt werden, z. B. 3-Dimethylaminopropylamin, 3-Diethylaminopropylamin, Piperazin, N-Methylpiperazin etc. Im allgemeinen werden niedermolekulare Amine verwendet, doch können auch Amine mit höherem Molekulargewicht eingesetzt werden, insbesondere dann, wenn die weichmachende Wirkung dieser Amine erwünscht ist. Es kann auch eine Mischung von niedermolekularen und höhermolekularen Aminen eingesetzt werden.

Wenn tertiäre Aminsalze mit Polyepoxiden umgesetzt werden, entstehen Bindemittel, welche quartäre Ammoniumgruppen enthalten.

Sollen Salze tertiärer Amine eingesetzt werden, so kommen vor allem Salze von solchen Aminen der allgemeinen Formel

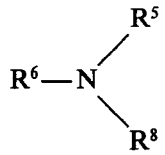

worin $R^5$ und $R^6$ die obengenannte Bedeutung haben und $R^8$ für eine Methylgruppe steht, in Betracht, welche also mindestens eine Methylgruppe enthalten. Beispiele sind Trimethylamin, Dimethylethylamin, Dimethylethanolamin, Methyldiethanolamin und Dimethyldecylamin. Derartige Amine können als Salze der Kohlensäure oder Carbonsäure, wie Essigsäure, Milchsäure, Ameisensäure, etc. eingesetzt werden.

Soll eine Addition von sekundären Aminen an die $\alpha,\beta$-olefinisch ungesättigte Säureamidgruppe im Sinne einer Michaeladdition vermieden werden, ist es zweckmäßig, zunächst die Reaktion der Epoxidverbindung mit dem Amin durchzuführen und anschließend die restlichen Epoxidgruppen mit dem $\alpha,\beta$-olefinisch ungesättigten Amidomethylgruppen enthaltenden Phenol umzusetzen. Beide Reaktionen können bei leicht erhöhten Temperaturen von 30 bis 150°C, vorzugsweise 60 bis 90°C, durchgeführt werden.

Die Umsetzung der $\alpha,\beta$-olefinisch ungesättigten Doppelbindungen mit Aminen ist eine Eventualmaßnahme und nur für den Fall zwingend, wenn über die Komponente (B) keinerlei basische Gruppen eingeführt werden sollen.

Es können dann sämtliche vorhandenen $\alpha,\beta$-olefinisch (acrylischen) ungesättigten Doppelbindungen in einer Michael-Reaktion mit sekundären Aminen umgesetzt werden, mit der Maßgabe, daß die Verfahrensprodukte aus (A) und (B) bezogen auf das Festharz 0,02 bis 10 Milliäquivalente pro Gramm, bevorzugt 0,3 bis 5,0 Milliäquivalente pro Gramm, an kationischen Gruppen enthalten. Sollen die erfindungsgemäßen Verfahrensprodukte für die kathodische Elektrotauchlackierung im Automobilbereich eingesetzt werden, so ist ein Bereich von 0,3 bis 2,0 Milliäquivalenten an kationischen Gruppen besonders bevorzugt.

Die Mengen an auf irgendeine Weise eingeführtem Amin muß mindestens ausreichend sein, um das fertige Bindemittel nach teilweiser oder vollständiger Neutralisation mit einer Säure wasserdispergierbar zu machen.

Die Mengen an Polyepoxidverbindungen (B) werden zweckmäßigerweise im allgemeinen so gewählt, daß die Epoxidgruppen ausreichen, um durch Reaktion mit den phenolischen OH-Gruppen der ungesättigten Amido- bzw. Imidomethylgruppen tragenden Mono- und/oder Polyphenole das für das Bindemittel gewünschte Molekulargewicht aufzubauen. Das Molekulargewicht der erfindungsgemäßen Polyadditions/Polykondensationsprodukte liegt im allgemeinen im Bereich von etwa 500 bis 10 000, vorzugsweise 1000 bis 5000. Es ist nicht immer notwendig, sämtliche phenolische OH-Gruppen mit den Epoxidgruppen umzusetzen, umgekehrt ist es nicht notwendig, daß sämtliche Epoxidgruppen umgesetzt werden.

Die erfindungsgemäßen Polyadditions/Polykondensationsprodukte sind jedoch vorzugsweise epoxidgruppenfrei.

Eine andere Möglichkeit, das erfindungsgemäße Herstellverfahren durchzuführen, besteht in der gleichzeitigen Zugabe von sekundärem Amin und Epoxidverbindung zu den Mono- und/oder Polyphenolen, der Komponente (A), die Gruppierungen der Formel I tragen. In diesem Fall kommt es in einer raschen und exothermen Reaktion zur Addition der Amine an die ungesättigten Gruppen der Komponente (A), während die nachfolgende Reaktion der phenolischen OH-Gruppen mit den Epoxidgruppen viel langsamer abläuft. Bei dieser gleichzeitigen Zugabeweise kann es in einem gewissen Umfang auch zu einer Addition von Amin an Epoxidgruppen kommen.

Im Falle des Einsatzes von Monophenolen ist schon im Hinblick auf die Bildung (Emission) von Spaltprodukten beim Härten selbstverständlich dafür zu sorgen, daß weitgehend alle phenolischen OH-Gruppen mit Epoxidgruppen umgesetzt werden. Erfindungsgemäß wird ein Überschuß von 5 bis 50% Epoxidäquivalenten eingesetzt, um den Verlust an Epoxidgruppen während der Reaktion von Komponente (A) mit Komponente (B) auszugleichen.

Als Temperaturbereich zur Umsetzung von Komponente (A) mit Komponente (B) ist 50 bis 120°C,

vorzugsweise 70 bis 90° C, geeignet. Dieser Temperaturbereich wird zweckmäßigerweise auch für die Michaelreaktion gewählt.

Die erfindungsgemäßen Polyadditions/Polykondensationsprodukte können mit den üblichen Lacklösungsmitteln, wie Alkoholen mit 3 bis 16 Kohlenstoffatomen, z. B. Isopropanol, n- oder iso-Butanol, Dekanol, Alkylaromaten, z. B. Toluol und Xylol, und Cycloaliphaten, sowie mit (oligomeren) Glykolen und Glykolethern oder wasserverdünnbaren organischen Lösungsmitteln verdünnt, gegebenenfalls zusammen mit Pigmenten, Füllstoffen und bei der Verarbeitung von Lacken üblichen Hilfsmitteln unter Anwendung konventioneller Lackiermethoden, wie Spritzen, Tauchen, Fluten, auf das zu überziehende bzw. zu lackierende Substrat, wie z. B. auf Holz, Metall, Glas oder Keramik, aufgetragen, getrocknet und bei Temperaturen von über 150° C gehärtet werden. Die damit erhaltenen Überzüge zeichnen sich beispielsweise durch hohe Härte und Lösungsmittelbeständigkeit aus.

Die erfindungsgemäßen Verfahrensprodukte lassen sich vorteilhaft auch durch Bestrahlen mit IR-, UV- und Elektronenstrahlen aushärten, wobei gegebenenfalls reaktive Verdünner, wie Mono- und Diacrylate, sowie die bei UV-Härtung zweckmäßigerweise üblichen UV-Initiatoren, wie z. B. Benzoinether oder Benzilketale mitverwendet werden.

Bevorzugt werden die erfindungsgemäßen Polyadditions/Polykondensationsprodukte, gegebenenfalls in Kombination mit anderen Bindemitteln, beispielsweise mit den genannten Polybutadienölen (in Mengen von bis zu 25 Gew.-%), jedoch mit Säuren, wie z. B. Phosphorsäure und ihren Derivaten, vorzugsweise mit wasserlöslichen Carbonsäuren, wie z. B. Essigsäure, Ameisensäure, Milchsäure, protoniert angewandt. Das protonierte Lackbindemittel ist wasserverdünnbar und kann unter Anwendung der oben angeführten konventionellen Lackiermethoden verarbeitet werden, wobei ebenfalls Überzüge mit sehr wertvollen Eigenschaften erhalten werden.

Die bevorzugte Verwendung der erfindungsgemäßen protonierten Polyadditions/Polykondensationsprodukte ist ihre Verwendung als Lackbindemittel für die kathodische Elektrotauchlackierung elektrisch leitender Flächen, z. B. von Metallteilen, Blechen usw. aus Messing, Kupfer, Aluminium, metallisierte Kunststoffe oder mit leitenden Kohlenstoff überzogene Materialien, soweit Eisen und Stahl, die gegebenenfalls chemisch vorbehandelt, z. B. phosphatiert, sind.

Die wäßrigen Lösungen oder Dispersionen der zumindest teilweise als Salz einer wasserlöslichen Carbonsäure vorliegenden erfindungsgemäßen Verfahrensprodukte können auch im Gemisch mit diesen durch Kataphorese elektrochemisch abscheidbare Hilfsstoffe enthalten, wie Pigmente, z. B. Ruß, Talkum, Titandioxid, Kaolin, basisches Bleichromat, Eisenoxidpigmente etc., lösliche Farbstoffe, Lösungsmittel, Verlaufsverbesserer, Stabilisatoren, Antischaummittel sowie andere Hilfs- und Zusatzstoffe, Härtungskatalysatoren, besonders die autoxidative Härtung beschleunigende metallhaltige Mangan- bzw. Kobalt-naphtenate oder -octoate, außerdem Metallsalze, wie sie zum bekannten Stand der Technik gehören und z. B. in der DE-OS 2 541 234 und 2 457 437 genannt sind.

Zur kathodischen Elektrotauchlackierung wird im allgemeinen durch Verdünnen mit entionisiertem Wasser ein Feststoffgehalt des Elektrotauchbades von 5 bis 30 Gewichtsprozent eingestellt. Die Abscheidung erfolgt im allgemeinen bei Temperaturen von 15 bis 40° C während einer Zeit von 1 bis 2 Minuten und bei pH-Bad-Werten von 4,0 bis 8,5, vorzugsweise pH 5,5 bis 7,5, bei Abscheidspannungen zwischen 50 und 500 Volt. Nach dem Abspülen des auf dem elektrisch leitenden Körper abgeschiedenen Films wird dieser bei etwa 140° C bis 200° C 10 bis 30 Minuten, vorzugsweise bei 150° C bis 180° C ca. 20 Minuten gehärtet.

Die folgenden Beispiele sollen die Erfindung noch näher erläutern, ohne sie zu beschränken. Die in den Beispielen genannten Teile und Prozente sind Gewichtsteile und Gewichtsprozente.

## Beispiel 1

### Herstellung eines in $\alpha$-Stellung Polydienylreste tragenden Bernsteinsäureimides

1700 Teile eines Polybutadienöles mit einem Molekulargewicht von ca. 900, einem Gehalt von 40 bis 50% 1,2-Vinyl; 30 bis 35% Trans-1,4- und 25 bis 30% Cis-1,4-Gruppen (z. B. Lithene PL® der Firma Metallgesellschaft AG), 300 Teile Maleinsäureanhydrid, 20 Teile Methylisobutylketon und 2 Teile phosphorige Säure werden bei 190° C 4 Stunden lang unter Stickstoffspülung zur Reaktion gebracht. Danach werden bei 160° C 83,2 Teile Harnstoff in ca. 40 Minuten zudosiert. Bei 190° C wird 3 Stunden lang weitergerührt und Wasser ausgekreist. Anschließend wird mit 455 Teilen Toluol auf einen Feststoffgehalt von 80% verdünnt. Der Feststoffgehalt beträgt 79,7%; der Gehalt an Imid 2,0% bezogen auf Festharz.

## Beispiel 2

### Herstellung eines in $\alpha$-Stellung Polydienylreste tragenden Bernsteinsäureimides

2000 Teile eines Polybutadienöles mit einem Molekulargewicht von ca. 900, einem Gehalt von 40 bis

50% 11,2 Vinyl, 10 bis 20% Trans-1,4-, 5 bis 10% Cis-1,4-Gruppen und 30 bis 40% alicyclischen Anteilen (z. B. Lithene AL® der Firma Metallgesellschaft AG), 353 Teile Maleinsäureanhydrid, 24 Teile Methylisobutylketon und 2,4 Teile phosphorige Säure werden bei 190°C 4 Stunden lang unter Stickstoffspülung zur Reaktion gebracht. Danach werden bei 160°C 100 Teile Xylol zugegeben und 121,4 Teile Harnstoff langsam zudosiert. Bei 190°C wird 3 Stunden lang weitergerührt und Wasser ausgekreist. Anschließend wird mit 520 Teilen Toluol auf einen Feststoffgehalt von 80% verdünnt. Der Feststoffgehalt beträgt 80,1%; der Gehalt an Imid 1,9% bezogen auf Festharz.

## Beispiel 3

### Herstellung eines Epoxid/Amin-Adduktes

Es werden 160,4 Teile eines Glycidylethers aus Pentaerythrit und Epichlorhydrin mit einem Epoxidwert von 0,623; 126,6 Teile Isopropanol und 14,1 Teile Isopropanol und 14,1 Teile vollentsalztem Wasser unter $CO_2$-Spülung auf 60°C aufgeheizt ($CO_2$-Spülung während der gesamten Reaktionsdauer).

Bei 60°C werden 34,7 Teile Diethanolamin in 30 Minuten zugetropft. Man läßt 15 Minuten bei dieser Temperatur nachrühren. Dann erfolgt die Zugabe von 998 Teilen eines Diglycidylethers aus Bisphenol A und Epichlorhydrin mit einem Epoxidwert von 0,5. Dann heizt man wieder auf 60°C auf und tropft in 30 bis 40 Minuten bei 60°C 228,8 Teile Diethanolamin zu. Bei 60°C reagiert der Ansatz dann noch weitere 2 Stunden nach.

## Beispiel 4

Es werden 1228,5 Teile eines Diglycidylethers aus Bisphenol A und Epichlorhydrin mit einem Epoxidwert von 0,2, 125,6 Teile Isopropanol und 14,1 Teile vollentsalztem Wasser unter $CO_2$-Spülung auf 60°C aufgeheizt ($CO_2$-Spülung während der gesamten Reaktionsdauer.) Bei 60°C werden 184 Teile Diethanolamin in 30 bis 40 Minuten zugetropft. Anschließend läßt man noch 2 Stunden bei 60°C nachreagieren.

## Beispiel 5

210 Teile des nach Beispiel 1 hergestellten Polybutadienmaleinimides, 56,6 Teile Bisphenol A, 40,5 Teile Paraformaldehyd, 90 Teile Acrylamid, 64,5 Teile Phenol, 0,2 Teile Hydrochinonmonomethylether, 0,5 Teile Phenothiazin und 32,9 Teile Toluol werden bei 100°C gelöst. Man läßt weitere 30 Minuten bei 100°C nachrühren und kühlt dann auf 50°C. Bei 50°C werden 1,5 Teile Bortrifluoriddiethyletherat zugegeben. Nach 1 Stunde Reaktion bei 50°C erfolgt die zweite Zugabe von 1,5 Teilen Bortrifluoriddiethyletherat. Man rührt 1 Stunde bei 50°C nach und wird dann auf 60°C aufgeheizt. Bei 60°C rührt man weitere 2 Stunden und verdünnt dann mit 70,8 Teilen Isobutanol auf einen theor. Feststoffgehalt von 70%. Anschließend wird bei einer Außentemperatur von 140°C das Wasser ausgekreist, wobei die Innentemperatur nicht über 115°C ansteigen soll. (Dauer: ca. 1,5 Stunden.) Danach erfolgt die Zugabe von 600 Teilen des Produktes nach Beispiel 3, 103 Teilen Isopropanol und 103 Teilen Ethylglykol. Bei 90°C läßt man den Ansatz ca. 8 Stunden reagieren, bzw. bis eine 70%ige Probe eine Viskosität von 2400 mPa · s erreicht hat (gemessen mit ICI Platten-Konus-Viskosimeter). Anschließend werden 9 Teile Essigsäure und 100 Teile vollentsalztes Wasser zugegeben. Der Feststoffgehalt des erfindungsgemäßen Verfahrensproduktes beträgt 66%.

## Beispiel 6

208,9 Teile des nach Beispiel 2 hergestellten Polybutadienmaleinimids, 90 Teile Acrylamid, 85 Teile Phenol, 53,4 Teile Paraformaldehyd, 0,2 Teile Hydrochinonmonomethylether, 0,5 Teile Phenothiazin und 25,2 Teile Toluol werden bei ca. 105°C gelöst. Man läßt weitere 30 Minuten bei 105°C nachrühren und kühlt dann auf 50°C. Bei 50°C werden 1,5 Teile Bortrifluoriddiethyletherat zugegeben. Nach 1 Stunde Nachreagieren bei 50°C erfolgt die zweite Zugabe von 1,5 Teilen Bortrifluoriddiethyletherat. Wieder wird 1 Stunde bei 50°C gerührt und dann mit 70,9 Teilen Toluol auf einen theor. Feststoffgehalt von 70% verdünnt. Anschließend wird bei einer Außentemperatur von 150°C das Wasser ausgekreist (Dauer: ca. 1,5 Stunden). Danach erfolgt bei 70°C die Zugabe von 30 Teilen Hydroxyethylpiperazin. Nach einstündigem Rühren bei 70°C gibt man 93,3 Teile Isopropanol, 93,3 Teile Ethylglykol, 31,9 Teile Bisphenol A, 65 Teile eines Epoxidharzes auf Basis Bisphenol A mit einem Epoxidwert von 0,2 (z. B. Epoxy 1/33 der Fa. Chemapol [CSSR]) und 506,7 des nach Beispiel 4 hergestellten Epoxid/Amin-Adduktes zu.

Bei 90°C läßt man den Ansatz reagieren bis eine 70%ige Probe eine Viskosität von 2400 mPa · s/75°C (gemessen mit dem ICI-Platten-Konus-Viskosimeter) erreicht hat, was nach ca. 2 Stunden der Fall ist. Die Reaktion wird dann durch Zugabe von 9 Teilen Essigsäure und 100 Teilen vollentsalztem Wasser abgebrochen. Der Feststoffgehalt beträgt 66,3%.

### Beispiel 7

Komponente (A) wird wie in Beispiel 6 beschrieben hergestellt und anschließend mit 5 Teilen Hydroxyethylpiperazin weiterbehandelt.

Darauf werden 100 Teile Ethylglykol, 100 Teile Isopropanol und 618,0 Teile eines nach Beispiel 3 gefertigten Epoxid/Amin-Adduktes mit folgendem Mengengerüst zugesetzt:

120,3 Teile eines Glycidylethers aus Pentaerythrit und Epichlorhydrin mit einem Epoxidwert von 0,623; 190 Teile Isopropanol, 21,2 Teile $H_2O$; 26 Teile Diethanolamin; 1497 Teile eines Glycidylethers aus Bisphenol A und Epichlorhydrin mit einem Epoxidwert von 0,5 und nochmals 343,2 Teile Diethanolamin.

Bei 90°C läßt man den Ansatz reagieren, bis eine 70%ige Probe eine Viskosität von 2400 mPa · s/75°C (gemessen mit dem ICI-Platten-Konus-Viskosimeter) erreicht ist, was nach ca. 5 Stunden der Fall ist.

Die Reaktion wird dann mit 9 Teilen Essigsäure und 100 Teilen vollentsalztem Wasser abgebrochen. Der Feststoffgehalt beträgt 68%.

### Beispiel 8

### Elektrotauchlackierung

Zur Herstellung eines 10%igen Lackbades werden 100 Teile des Festharzes nach Beispiel 5 mit 1,8% Essigsäure protoniert und mit vollentsalztem Wasser auf 1000 Teile verdünnt.

Dann erfolgt die Zugabe von 500 ppm Blei (berechnet auf Badvolumen) als wäßrige Bleiacetatlösung. Das Lackbad wird 24 Stunden bei 25°C gerührt; es hat einen pH-Wert von 6,2 und einen Leitwert von $1{,}35 \cdot 10^{-3}\ S \cdot cm^{-1}$. Nach 24 Stunden Ausrühren erfolgt die Zugabe von 5 Teilen Isodekanol.

Auf phosphatierten Stahlblechen erhält man nach der Abscheidung (2 Minuten 140 V bei 25°C) und Härtung (20 Minuten bei 180°C) einen Überzug mit einer Schichtdicke von 15 µm. Auf nicht vorbehandelten Stahlblechen erhält man nach der Abscheidung (2 Minuten, 50 V bei 25°C) und Härtung (20 Minuten bei 180°C) einen Überzug mit einer Schichtdicke von 15 µm, der biege- und schlagfest war.

Die Korrosionsprüfung nach DIN 50 021 ergab nach 10 Tagen auf eisenphosphatierten Stahlblechen die wassernachgespült und luftgetrocknet waren (z. B. Bonder® 1041 WL) eine Unterwanderung von 0,5 bis 1,8 mm und auf zinkphosphatierten Stahlblechen, die wassernachgespült und luftgetrocknet waren (z. B. Bonder 127 WL) eine Unterwanderung von 0,5 bis 2,2 mm (gemessen vom Schnitt). Nicht vorbehandelte Stahlbleche wiesen nach 10 Tagen eine Unterwanderung von 1 bis 5 mm auf (gemessen vom Schnitt).

### Beispiel 9

Zur Herstellung eines 10%igen Lackbades werden 92 Teile des Festharzes nach Beispiel 5, 8 Teile Polyöl Hüls 130 und 4 Teile eines Alkohols mit $C_{12-14}$-Kettenlänge gut gemischt, mit 1,9% Essigsäure (berechnet auf Festharz) protoniert und mit vollentsalztem Wasser auf 1000 Teile verdünnt. Dann erfolgt die Zugabe von 500 ppm Blei (berechnet auf Badvolumen) als wäßrige Bleiacetatlösung. Das Lackbad wird 24 Stunden bei 25°C gerührt; es hat einen pH-Wert von 6,1 und einen Leitwert von $1{,}3 \cdot 10^{-3}\ S \cdot cm^{-1}$. Nach 24 Stunden Ausrühren erfolgt die Zugabe von 7 Teilen Isodekanol.

Auf phosphatierten Stahlblechen erhält man nach der Abscheidung (2 Minuten/90 bis 120 V bei 25°C) und Härtung (20 Minuten bei 180°C) einen Überzug mit einer Schichtdicke von 15 µm. Auf blanken Stahlblechen erhält man nach der Abscheidung (2 Minuten/50 V bei 25°C) und Härtung (20 Minuten bei 180°C) einen Überzug mit einer Schichtdicke von 15 µm, der biege- und schlagfest ist. Die Korrosionsprüfung nach DIN 50 021 ergab nach 10 Tagen auf eisenphosphatierten Stahlblechen die wassernachgespült und luftgetrocknet waren (z. B. Bonder® 1041 WL) eine Unterwanderung von 0,6 bis 2,2 mm (gemessen vom Schnitt). Nicht vorbehandelte Stahlbleche wiesen nach 10 Tagen eine Unterwanderung von 1 bis 3,3 mm auf (gemessen vom Schnitt).

### Beispiel 10

Zur Herstellung eines 10%igen Lackbades werden 100 Teile des Festharzes nach Beispiel 6 mit 2,5% Essigsäure protoniert und mit vollentsalztem Wasser auf 1000 Teile verdünnt. Dann erfolgt die Zugabe

von 500 ppm Blei (berechnet auf Badvolumen) als wäßrige Bleiacetatlösung. Das Lackbad wird 24 Stunden bei 25° C gerührt; es hat einen pH-Wert von 5,6 und einen Leitwert von 1,08 · $10^{-3}$ S · $cm^{-1}$. Nach 24 Stunden Ausrühren erfolgt die Zugabe von 10 Teilen Isodekanol. Auf phosphatierten Stahlblechen erhält man nach der Abscheidung (2 Minuten/140 Volt bei 25° C) und Härtung (20 Minuten bei 180° C) einen Überzug mit einer Schichtdicke von 15 µm. Auf blanken Stahlblechen erhält man nach der Abscheidung (2 Minuten/80 Volt bei 25° C) und Härtung (20 Minuten bei 180° C) einen Überzug mit einer Schichtdicke von 16 µm.

Die Korrosionsprüfung nach DIN 50 021 ergab nach 10 Tagen auf eisenphosphatierten Stahlblechen, die wassernachgespült waren (z. B. Bonder® 1041 W) eine Unterwanderung von 0,2 bis 1,3 mm und auf zinkphosphatierten Stahlblechen, die luftgetrocknet waren (z. B. Bonder® 127 L), eine Unterwanderung von 0,3 bis 0,9 mm (gemessen vom Schnitt). Nicht vorbehandelte Stahlbleche hatten nach 10 Tagen 0,6 bis 3,1 mm Unterwanderung (gemessen vom Schnitt).

Beispiel 11

Zur Herstellung eines 10%igen Lackbades werden 261 Teile des Bindemittels nach Beispiel 7; 26 Teile eines Polybutadienöles mit einem Molekulargewicht von ca. 1800, wie in Beispiel 2 angegeben (z. B. Lithene AH® der Fa. Metallgesellschaft AG), 22 Teile des Alkohols gemäß Beispiel 9 und 1,0 Teile Mangan-naphthenat (z. B. Soligen®-Mangan der Fa. Hoechst AG, enthält 6% Mn) gemischt, mit 4,7 Teilen Essigsäure 99%ig protoniert und mit vollentsalztem Wasser auf 2000 Teile verdünnt.

Dann erfolgt die Zugabe von 500 ppm Blei (berechnet auf Badvolumen) als wäßrige Bleiacetatlösung und 10 Teilen Butyldiglykol. Das Lackbad wird 48 Stunden bei 30° C gerührt; es hat einen pH-Wert von 5,8 und einen Leitwert von 1,6 · $10^{-3}$ S · $cm^{-1}$.

Auf phosphatierten Stahlblechen erhält man nach der Abscheidung (2 Minuten/120 bis 130 V bei 30° C) auf nicht vorbehandelten Stahlblechen erhält man nach der Abscheidung (2 Minuten/80 V bei 30° C) und Härtung (20 Minuten bei 180° C) Überzüge mit einer Schichtdicke von 15 bis 18 µm, die glatt, schlag- und biegefest sind und die nach 100 Doppelabreibungen (s. dazu DE-OS 2 934 467) mit einem azetongetränkten Wattestück keine Veränderung aufwiesen. Zur Badalterung wurde das Lackbad weitere 30 Tage bei 30° C gerührt. Badzustand, Baddaten, Abscheidungsdaten und Aussehen der Filme waren praktisch unverändert.

Die Korrosionsprüfung nach DIN 50 021 ergab nach 10 Tagen auf eisenphosphatierten Stahlblechen, die wassergespült und luftgetrocknet waren (z. B. Bonder® 1041 WL) eine Unterwanderung von 0,5 bis 1,2 mm und auf zinkphosphatierten Stahlblechen, die wassergespült und luftgetrocknet waren (z. B. Bonder® 127 L), eine Unterwanderung von 1,5 bis 1,2 mm (gemessen am Schnitt). Nicht vorbehandelte Stahlbleche wiesen nach 10 Tagen eine Unterwanderung von 0,3 bis 2,5 mm auf (gemessen vom Schnitt).

**Patentansprüche**

1. Durch Protonierung mit Säure wasserverdünnbares stickstoffbasische Gruppen tragendes Polyadditions/Polykondensationsprodukt, das Gruppen der allgemeinen Formel (I)

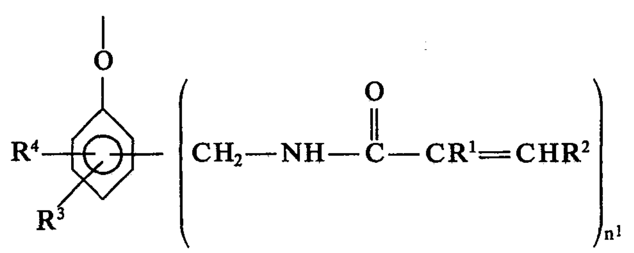

(I)

und/oder

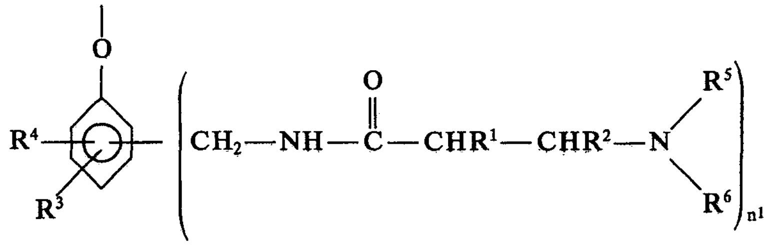

(II)

enthält, dadurch gekennzeichnet, daß es zusätzlich Gruppierungen der Formel (III)

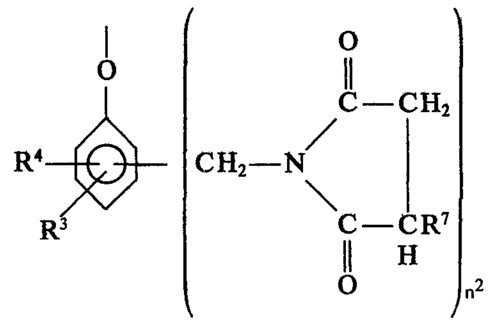

(III)

enthält, wobei $R^1$ und $R^2$ untereinander gleich oder verschieden sind und für Wasserstoff oder eine Methylgruppe stehen, $R^3$ und $R^4$ untereinander gleich oder verschieden sind und für Wasserstoff, einen Alkylrest mit 1 bis 13 Kohlenstoffatomen oder für einen an ein Phenol oder einen Phenolether gebundenen Methylen-, Isopropyliden-,

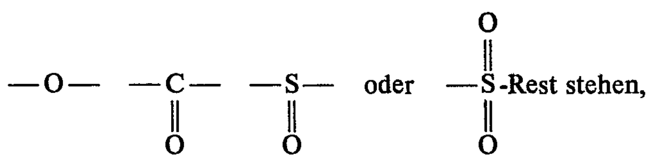
oder -Rest stehen,

$R^5$ und $R^6$ untereinander gleich oder verschieden sind und für einen Alkylrest mit 1 bis 10 Kohlenstoffatomen, eine Hydroxylalkyl- oder Alkoxyalkylgruppe mit 2 bis 10 Kohlenstoffatomen stehen oder miteinander zu einem 5- oder 6gliedrigen Ring verknüpft sind,

$R^7$ für einen Polydienylrest steht,
$n^1$ = 0,5 bis 3 und
$n^2$ = 0,05 bis 1,0, mit der Maßgabe, daß das Polyadditions/Polykondensationsprodukt dadurch hergestellt worden ist, daß

(A) ein Gemisch aus Amido- und Imido-methylphenolen, das durch Umsetzung von

($a_1$) ein- oder mehrkernigen Mono- und/oder Polyphenolen mit
($a_2$) Amiden $\alpha,\beta$-olefinisch ungesättigter Carbonsäuren mit 3 bis 4 Kohlenstoffatomen,
($a_3$) Bernsteinsäureimiden, die in $\alpha$-Stellung einen Polydienylrest tragen, und
($a_4$) Formaldehyd oder einer Formaldehyd liefernden Verbindung
in Gegenwart
($a_5$) eines sauren Katalysators
erhalten worden ist, wobei gegebenenfalls zumindest an einen Teil der olefinischen Doppelbindungen
($a_6$) ein sekundäres Amin addiert worden ist, mit

(B) mindestens einer Epoxidverbindung umgesetzt worden ist und 30 bis 80 Gewichtsprozent des Gemisches aus Amido- und Imido-methylphenol (A) mit 20 bis 70 Gewichtsprozent Epoxidverbindung (B) umgesetzt worden sind, und die so erhaltenen Reaktionsprodukte 0,02 bis 10 Milliäquivalente an basischem Stickstoff pro Gramm Feststoff enthalten.

2. Polyadditions/Polykondensationsprodukt nach Anspruch 1, dadurch gekennzeichnet, daß es einen Zusatz von bis zu 25 Gew.-%, bezogen auf Festharz, eines Polydiens enthält.

3. Polyadditions/Polykondensationsprodukt nach Anspruch 1, dadurch gekennzeichnet, daß als Komponente (B) eine Epoxidverbindung verwendet wird, die durch partielle Umsetzung eines Polyepoxids mit einem primären und/oder sekundären Amin erhalten worden ist.

4. Polyadditions/Polykondensationsprodukt nach Anspruch 1 oder 3, dadurch gekennzeichnet, daß als Komponente ($a_2$) Acrylamid verwendet worden ist.

5. Polyadditions/Polykondensationsprodukt nach Anspruch 1, 3 oder 4, dadurch gekennzeichnet, daß als Komponente ($a_3$) ein Umsetzungsprodukt aus einem Polydien eines mittleren Molekulargewichts von 200 bis 6000 mit Maleinsäureanhydrid, das durch Umsetzung mit Ammoniak oder einer Ammoniak liefernden Verbindung in das Imid umgewandelt wurde, verwendet worden ist.

6. Polyadditions/Polykondensationsprodukt nach Anspruch 1, 3, 4 oder 5, dadurch gekennzeichnet, daß als Komponente ($a_6$) N-Hydroxyethylpiperazin verwendet worden ist.

7. Verwendung der Polyadditions/Polykondensationsprodukte nach Anspruch 1, zur kathodischen Elektrotauchlackierung metallischer Gegenstände.

**Claims**

1. A polyadduct/polycondensate which is water-dilutable when protonated with an acid and which contains basic nitrogen groups, the groups being of the general formula (I)

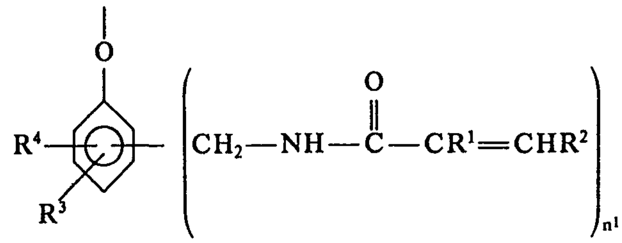

(I)

and/or of the general formula (II)

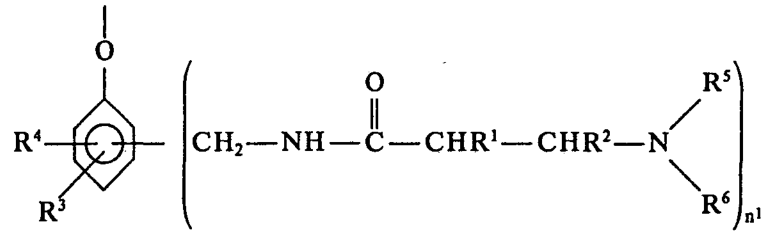

(II)

and which additionally contains groups of the formula (III)

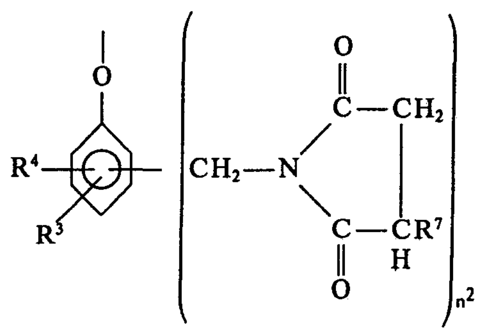

(III)

in which formulae $R^1$ and $R^2$ are identical or different and each is hydrogen or methyl, $R^3$ and $R^4$ are identical or different and each is hydrogen, alkyl of 1 to 13 carbon atoms or a methylene, isopropylidene,

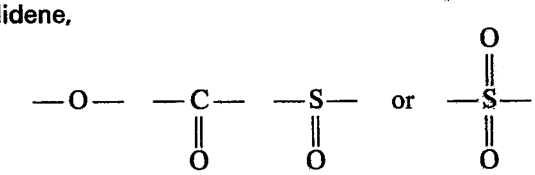

or radical,

bonded to a phenol or a phenol-ether, $R^5$ and $R^6$ are identical or different and each is alkyl of 1 to 10 carbon atoms or hydroxyalkyl or alkoxyalkyl of 2 to 10 carbon atoms, or $R^5$ and $R^6$ are linked together to form a 5-membered or 6-membered ring,

$R^7$ is a polydienyl radical,
$n^1$ is from 0.5 to 3 and
$n^2$ is from 0.05 to 1.0,

with the proviso that the polyadduct/polycondensate has been produced by reacting

(A) a mixture of amido- and imido-methylphenols which has been obtained by reacting

($a_1$) mononuclear or polynuclear monophenols or polyphenols or a mixture thereof with
($a_2$) amides of $\alpha,\beta$-olefinically unsaturated carboxylic acids of 3 or 4 carbon atoms,
($a_3$) succinimides which carry a polydienyl radical in the $\alpha$-position, and
($a_4$) formaldehyde or a formaldehyde donor, in the presence of
($a_5$) an acidic catalyst, with or without

($a_6$) a secondary amine having undergone adduct formation with some or all of the olefinic double bonds, with

(B) one or more epoxide compounds, from 30 to 80 per cent by weight of the mixture of amido- and imido-methylphenol (A) having been reacted with from 20 to 70 per cent by weight of epoxide compound (B), and the reaction products thus obtained containing from 0.02 to 10 milliequivalents of basic nitrogen per gram of solids.

2. A polyadduct/polycondensate as claimed in claim 1, to which up to 25% by weight, based on solid resin, of a polydiene has been added.

3. A polyadduct/polycondensate as claimed in claim 1, wherein there is used as component (B) an epoxide compound which has been obtained by partial reaction of a polyepoxide with a primary or secondary amine or with a mixture of primary and secondary amines.

4. A polyadduct/polycondensate as claimed in claim 1 or 3, wherein acrylamide is used as component ($a_2$).

5. A polyadduct/polycondensate as claimed in claim 1, 3 or 4, wherein there has been used as component ($a_3$) a reaction product of a polydiene, having a mean molecular weight of from 200 to 6,000, and maleic anhydride, which product has been converted into the imide by reaction with ammonia or with an ammonia donor.

6. A polyadduct/polycondensate as claimed in claim 1, 3, 4 or 5, wherein N-hydroxyethylpiperazine has been used as component ($a_6$).

7. The use of a polyadduct/polycondensate as claimed in claim 1 for the cathodic electrocoating of metallic articles.

**Revendications**

1. Produit de polyaddition/polycondensation portant des groupes azotés basiques, rendu diluable à l'eau par protonation par un acide, qui contient des groupes de l'une des formules (I)

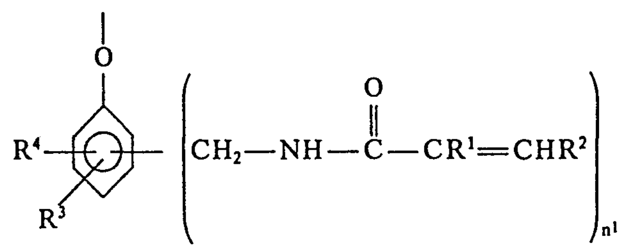

(I)

et(ou) (II)

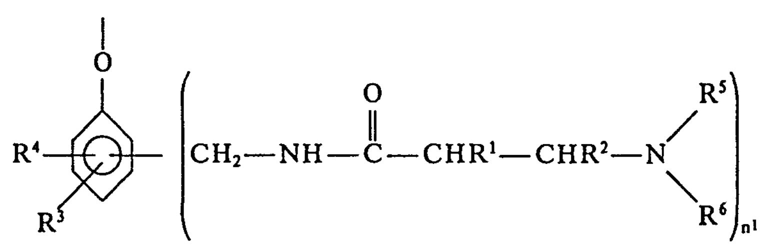

(II)

caractérisé en ce qu'il contient en outre des groupements de la formule (III)

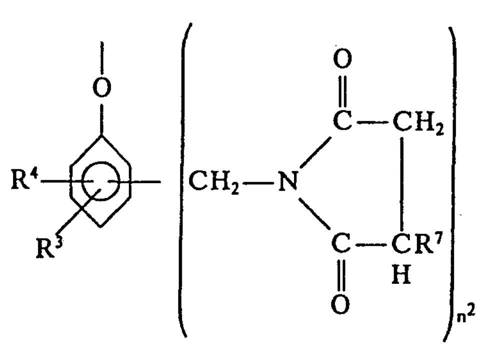

(III)

où $R^1$ et $R^2$, qui peuvent être identiques ou différents, désignent chacun un atome d'hydrogène ou un radical méthyle;

$R^3$ et $R^4$, qui peuvent être identiques ou différents, désignent chacun un atome d'hydrogène, un radical alkyle en $C_1$ à $C_{13}$ ou un groupe méthylène, isopropylidène,

—O— 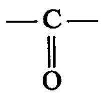 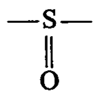 ou 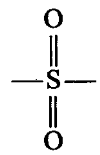 lié à un groupe phénol ou phénol-éther;

$R^5$ et $R^6$, qui peuvent être identiques ou différents, désignent chacun un radical alkyle en $C_1$ à $C_{10}$, hydroxy-alkyle ou alcoxy-alkyle en $C_2$ à $C_{10}$ ou forment ensemble un noyau cyclique penta- ou hexagonal;

$R^7$ représente un reste poly-diényle;
$n^1$ vaut 0,5 à 3 et
$n^2$ vaut 0,05 à 1,0,

ce produit de polyaddition/polycondensation ayant été préparé par la réaction de

(A) un mélange d'amido- et d'imido-méthyl-phénols, obtenu par réaction

(a$_1$) de mono- et(ou) poly-phénols mono- ou pluricycliques,
(a$_2$) d'amides d'acides carboxyliques à insaturation $\alpha,\beta$-oléfinique en $C_3$ ou $C_4$,
(a$_3$) d'imides d'acide succinique, portant en position $\alpha$ un reste poly-diényle, et
(a$_4$) de formaldéhyde ou d'un composé fournissant du formaldéhyde,
en présende de
(a$_5$) un catalyseur acide,
(a$_6$) une amine secondaire étant éventuellement additionnée sur au moins une partie des doubles liaisons oléfiniques, avec

(B) au moins un composé époxy à raison de 30 à 80% en poids du mélange d'amido- et d'imido-méthyl-phénols (A) pour 20 à 70% en poids de composé époxy (B), le produit réactionnel obtenu contenant entre 0,02 et 10 milli-équivalents d'azote basique par gramme de matière solide.

2. Produit de polyaddition/polycondensation suivant la revendication 1, caractérisé en ce qu'il contient en outre jusqu'à 25% en poids, par rapport à la résine solide, d'un poly-diène.

3. Produit de polyaddition/polycondensation suivant la revendication 1, caractérisé en ce que le composé époxy (B) est un composé obtenu par réaction partielle d'un poly-époxyde avec une amine primaire et(ou) secondaire.

4. Produit de polyaddition/polycondensation suivant la revendication 1 ou la revendication 3, caractérisé en ce que le composant (a$_2$) est de l'amide acrylique.

5. Produit de polyaddition/polycondensation suivant l'une des revendications 1, 3 et 4, caractérisé en ce que le composant (a$_3$) est le produit de la réaction d'un polydiène d'un poids moléculaire moyen de 200 à 6000 et d'anhydride maléique, transformé en imide par réaction avec l'ammoniac ou avec un composé fournissant de l'ammoniac.

6. Produit de polyaddition/polycondensation suivant l'une des revendications 1, 3, 4 et 5, caractérisé en ce que le composant (a$_6$) est la N-hydroxyéthyl-pipérazine.

7. Utilisation des produits de polyaddition/polycondensation suivant la revendication 1 pour le vernissage électrolytique cathodique à l'immersion d'objets métalliques.